# EUROPÄISCHE PATENTSCHRIFT

(11) **EP 1 042 704 B1**
(45) Veröffentlichungstag und Bekanntmachung des Hinweises auf die Patenterteilung: **26.02.2003**
(21) Anmeldenummer: 98966812.4
(22) Anmeldetag: 22.12.1998
(51) Int. Cl.: G03B 1/60, G03B 1/66, G03B 17/30

(54) **LAUFBILDKAMERA-KASSETTEN-SYSTEM**
MOTION PICTURE CAMERA AND CASSETTE SYSTEM
SYSTEME DE CAMERA ET CASSETTES

(30) Priorität: 23.12.1997 DE 19758396
(43) Veröffentlichungstag der Anmeldung: 11.10.2000
(73) Patentinhaber: ARNOLD & RICHTER CINE TECHNIK GMBH & CO. BETRIEBS KG, 80799 München (DE)
(72) Erfinder: NGUYEN-NHU, Anh, D-85716 Unterschleissheim (DE)
(74) Vertreter: Ninnemann, Detlef, Dipl.-Ing.
(86) Internationale Anmeldenummer: DE9803799
(87) Internationale Veröffentlichungsnummer: WO99034253

(56) Entgegenhaltungen:
- EP-A- 0 627 652
- US-A- 3 918 802
- US-A- 4 443 077
- US-A- 4 627 695
- US-A- 5 467 155

## Beschreibung

Die Erfindung bezieht sich auf ein Laufbildkamera-Kassetten-System.

Aus der US-A-4 627 695 ist ein Laufbildkamera-Kassetten-System bekannt, das eine automatische Messung und Anzeige belichteten und unbelichteten Films in einer von mehreren austauschbaren Filmkassetten aufweist, die mit dem Kamerakörper einer Laufbildkamera verbindbar sind. Zu diesem Zweck weist jede Filmkassette zur Identifikation eine Kassettencodierung auf, die ausschließlich dieser Filmkassette zugeordnet ist. Die Laufbildkamera weist eine Vorrichtung zum Lesen und Identifizieren der Kassettencodierungen sowie einen Speicher mit mehreren Speicherbereichen auf, die den einzelnen Filmkassetten zugeordnet sind und die Länge des belichteten oder unbelichteten Films in der Filmkassette speichert, die diesem Speicherbereich zugeordnet ist. Zusätzlich weist die Laufbildkamera einen Mikroprozessor auf, der die Kassettenidentifikationssignale aufnimmt und dem Meßimpulse zugeführt werden, die von einem mit dem Filmmotor verbundenen Impulsgenerator bei jedem durch das Bildfenster der Laufbildkamera laufenden Filmbildes abgegeben werden.

Bei diesem bekannten Laufbildkamera-Kassetten-System speichert und verändert die Laufbildkamera die Länge des belichteten oder unbelichteten Films einer Filmkassette, die lediglich ein Identifikationszeichen aufweist, das von der Laufbildkamera erfaßt wird. Dabei ist die Anzahl der mit der Kamera verbindbaren und von der Kamera identifizierbaren Filmkassetten von der Länge der Identifizierungsmarke sowie von der Größe des Kameraspeichers abhängig. Die Länge der Identifikationsmarke wiederum bedingt eine entsprechende Anzahl Markierungen an der Filmkassette sowie Sensoren zur Erfassung der Identifikationsmarken auf der Seite der Laufbildkamera.

Ein weiterer Nachteil des bekannten Laufbildkamera-Kassetten-Systems besteht darin, daß die verschiedenen Filmkassetten jeweils nur einer Laufbildkamera zugeordnet sind. Wird eine bestimmte Filmkassette mit einer anderen Laufbildkamera verbunden, so sind entweder zuvor die Daten von der der betreffenden Filmkassette ursprünglich zugeordneten Laufbildkamera abzufragen und in den Speicher der anderen Laufbildkamera einzugeben oder die Filmkassette ist mit einem unbelichteten Film bekannter Länge zu beladen.

Weiterhin ist ein Datenaustausch mit einer in der Filmproduktion eingesetzten Datenverarbeitungseinrichtung nur über eine Verbindung mit der Laufbildkamera herzustellen. Kassetten-, film- und produktionsspezifische Daten sind dabei nicht oder nur mit erheblichem Aufwand zu erfassen, zu speichern und weiterzuverarbeiten.

Aus der EP 0 627 652 ist eine Filmpatrone für Stehbildkameras mit einem abtrennbaren Speichermodul versehen, das während der Filmbelichtung Daten aufzeichnet, die die Bildnummer, Belichtungsinformationen, Aufnahmedatum und andere Daten automatisch oder nach einem Aufzeichnungsbefehl aufzeichnet.

Aus der Us 4,443,077 ist eine Filmkassette für eine Stehbildkamera bekannt, bei der eine Filmpatrone für den unbelichteten Film und eine Filmpatrone für den belichteten Film über einen Verbindungsschacht miteinander verbunden sind. Die Filmkassette ist mit einer Magnetscheibe zur Aufzeichnung von filmspezifischen Daten versehen, die beim Transport eines Filmbildes zwei Umdrehungen macht, wobei während der ersten Umdrehung auf der Magnetscheibe gespeicherte Daten ausgelesen und während der zweiten Umdrehung Datenänderungen auf der Magnetscheibe gespeichert werden. Der Fotoapparat, in den die Filmkassette eingesetzt wird, tauscht Daten mit der Magnetscheibe aus, indem über einen Prozessor die auf der Magnetscheibe gespeicherten Daten ausgelesen bzw. neue oder geänderte Daten auf die Magnetscheibe geschrieben werden.

Aufgabe der vorliegenden Erfindung ist es, ein Laufbildkamera-Kassetten-System zu schaffen, das ein flexibles Eingeben und Ablesen verschiedener film-, kassetten- oder produktionsspezifischer Daten einschließlich der Länge des belichteten und unbelichteten Films ermöglicht und diese Daten mit der jeweiligen Filmaufnahmesequenz koppelt.

Diese Aufgabe wird erfindungsgemäß durch die Merkmale des Anspruchs 1 gelöst.

Die erfindungsgemäße Lösung ermöglicht einen Datenaustausch zwischen einer beliebigen Anzahl Filmkassetten mit wahlweise verschiedenen Laufbildkameras und einer Datenverarbeitungseinrichtung sowie ein flexibles Eingeben und Ablesen verschiedener film-, kassetten- oder produktionsspezifischer Daten einschließlich der Länge des belichteten und unbelichteten Films und Kopplung dieser Daten mit den jeweiligen in einer Filmkassette enthaltenen Filmaufnahmesequenzen.

Die in jeder Filmkassette enthaltene Speichereinrichtung ermöglicht neben einer individuellen Markierung der Filmkassetten und Speicherung der jeweils belichteten bzw. unbelichteten Filmlänge der betreffenden Kassette auch die Eingabe und Speicherung weiterer für eine Filmproduktion wichtiger Daten, wie Produktionsnummer, Filmtyp, Filmsequenz usw.

Durch die Speicherung film-, kassetten- und produktionsspezifischer Daten in jeder Filmkassette kann die Eingabe und Anzeige dieser Daten wahlweise unmittelbar an der Filmkassette, an der Laufbildkamera oder an einem Display der Datenverarbeitungseinrichtung erfolgen.

Die elektronische Datenverarbeitungseinrichtung dient insbesondere zur Verarbeitung, Dokumentation und Anzeige der von einer Laufbildkamera oder einer Filmkassette abgegebenen Daten und kann ihrerseits Daten, wie beispielsweise beim Laden einer Filmkassette die Länge des eingelegten, unbelichteten Laufbildfilms in die Speichereinrichtung der Filmkassette, die Eingabe einer Produktionsnummer sowohl in eine Laufbildkamera als auch in eine mit dieser verbundene oder von einer Laufbildkamera getrennte Filmkassette übertragen.

Der Datenaustausch zwischen Laufbildkamera, Filmkassette und elektronischer Datenverarbeitungseinrichtung erfolgt vorzugsweise über eine elektro-optische oder magnetische Übertragungseinrichtung bzw. über eine elektrische Leitungsverbindung, wobei zur seriellen Datenübertragung lediglich eine Datenleitung erforderlich ist.

Vorzugsweise kann als Schnittstelle an der Laufbildkamera eine dort ohnehin vorhandene Schnittstelle, wie beispielsweise eine Timecode-Schnittstelle eine Schnittstelle für eine Videoausspiegelung oder dergleichen verwendet werden.

Anhand eines in der Zeichnung dargestellten Ausführungsbeispieles soll der der Erfindung zugrundeliegende Gedanke näher erläutert werden. Es zeigen:
- Figur 1 -: eine schematische Darstellung der Verbindung mehrerer Filmkassetten unterschiedlichen Kassettentyps mit zwei verschiedenen Laufbildkameras und einer elektronischen Datenverarbeitungseinrichtung und
- Figur 2 -: ein Blockschaltbild der Datenerfassungs-, Speicherungs- und Anzeigeeinrichtungen in einer Laufbildkamera, Filmkassette und elektronischen Datenverarbeitungseinrichtung.

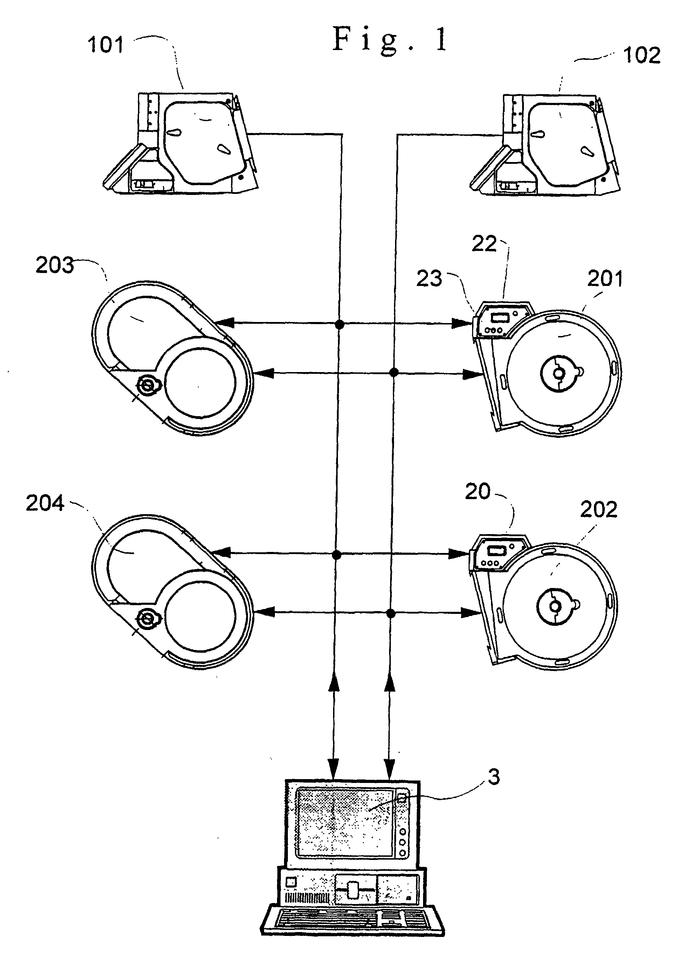

Das in Figur 1 dargestellte Verbindungsschema zeigt den Kamerakörper von zwei Laufbildkameras 101, 102 mit einem Kamerawerk, aber ohne explizite Darstellung der Aufnahmeund Sucheroptik. Mittels eines im Kamerawerk enthaltenen Filmtransportmechanismus wird ein Laufbildfilm intermittierend an einem Bildfenster entlangbewegt, wobei während eines Filmtransportschrittes eine rotierende Spiegelblende oder Irisblende den Aufnanmestrahlengang abdeckt und diesen während des Bildstandes zur Filmbelichtung freigibt. An dem Kamerakörper der Laufbildkameras 101, 102 ist eine Filmkassette zu befestigen, in die der belichtete und unbelichtete Laufbildfilm aufgenommen wird.

Da im Verlaufe einer Filmproduktion Laufbildfilme unterschiedlicher Lichtempfindlichkeit verwendet werden und je nach Filmsequenz eine Mindestlänge zur Durchführung eines "Filmtakes" erforderlich ist, stehen mehrere Filmkassetten mit unterschiedlichen Filmlängen und sonstigen filmspezifischen Daten wie beispielsweise unterschiedlichen Herstellern des Laufbildfilms, Filmtypen sowie Art des Films (Schwarzweiß-, Farbnegativ-, Farbumkehr-Film), Filmempfindlichkeiten und dgl. während einer Produktion zur Verfügung. Darüber hinaus werden auch unterschiedliche Kassettentypen, wie Koaxialkassetten oder Einraumkassetten je nach den Wünschen des Kameramannes bereitgestellt.

Aus diesen Gründen sind die Laufbildkameras 101, 102 mit verschiedenen Filmkassetten 201 bis 204 verbindbar, von denen beispielsweise die Koaxialkassetten 201 und 202 unterschiedliche Längen unbelichteten Films sowie wahlweise unterschiedlicher Lichtempfindlichkeit enthalten bzw. zur Zusammenstellung unterschiedlicher Filmsequenzen vorgesehen sind. In gleicher Weise stehen verschiedene Einraumkassetten 203, 204 zur Verfügung, die ebenfalls unterschiedliche Längen unbelichteten und belichteten Films mit beispielsweise unterschiedlicher Filmempfindlichkeit enthalten können.

Jede dieser Filmkassetten 201-204 enthält eine Speichereinrichtung, in der film-, kassetten- und produktionsspezifische Daten speicherbar sind. Filmspezifische Daten sind beispielsweise die Länge des belichteten und/oder unbelichteten Films, Filmtyp, Art des Films und Filmempfindlichkeit. Diese Daten können auf dem Display 22 einer Anzeigeund Eingabeeinrichtung 20 der Filmkassette 201-204 angezeigt und von einer Bedienungsperson an einer Eingabetastatur 23 der Filmkassette 201-204 eingegeben bzw. verändert werden. Eine derartige Anzeige- und Eingabeeinrichtung 20 ist jedoch nicht zwingend erforderlich. Die Einraumkassetten 203, 204 weisen daher im Ausführungsbeispiel eine derartige Anzeige- und Eingabeeinrichtung nicht auf.

Die Laufbildkameras 101, 102 sind über eine Datenleitung mit den am Kamerakörper angelenkten Filmkassetten 201-204 zum Datenaustausch verbindbar. Weiterhin können die Laufbildkameras 101, 102 sowie die verschiedenen Filmkassetten 201-204 zum Datenaustausch mit einer elektronischen Datenverarbeitungseinrichtung 3 verbunden werden. Eine derartige Verbindung dient in erster Linie der Dokumentation produktionsspezifischer Daten. Sie kann aber auch bei nicht vorhandener Anzeige- und Eingabeeinrichtung an den einzelnen Filmkassetten 201-204 zur Eingabe von Daten in die Speichereinrichtung der einzelnen Filmkassetten 201-204 sowie zur Anzeige der in der Speichereinrichtung der Filmkassetten 201-204 gespeicherten Daten ebenso verwendet werden wie die Anzeige- und Eingabevorrichtungen der Laufbildkameras 101, 102.

Die elektronische Datenverarbeitungseinrichtung 3 kann weiterhin zum Datenaustausch mit den in den Laufbildkameras 101, 102 gespeicherten Daten sowie zur Verknüpfung und Verarbeitung verschiedener von den Laufbildkameras 101, 102 und den Filmkassetten 201-204 empfangenen Daten verwendet werden.

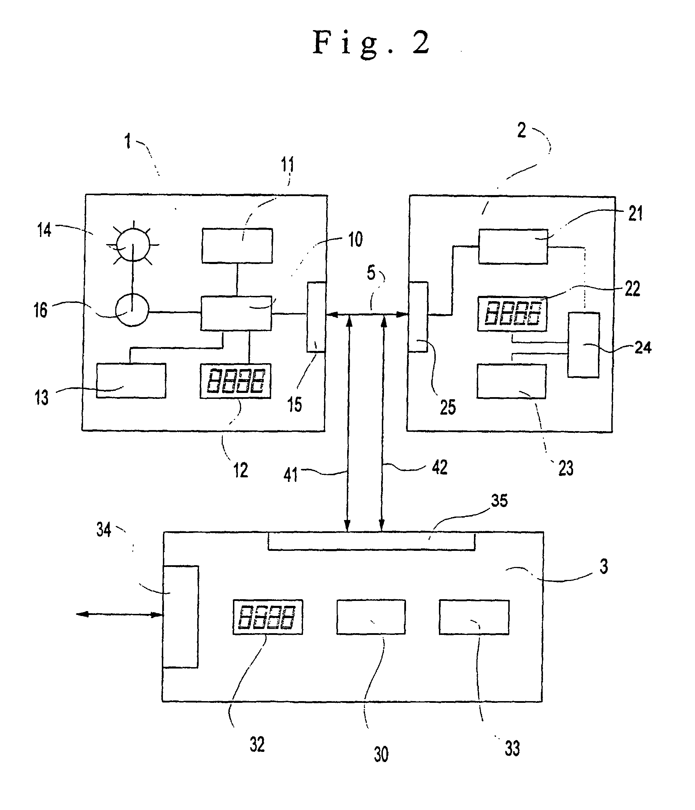

Das in Figur 2 dargestellte Blockschaltbild zeigt die interne Struktur des erfindungsgemäßen Kamera-Kassetten-Systems zum Austausch von Daten zwischen einer Laufbildkamera 1, einer Filmkassette 2 und/oder einer elektronischen Datenverarbeitungseinrichtung 3.

Die Laufbildkamera 1 enthält in an sich bekannter Weise ein Filmschaltwerk 14, das mit einem Impulsgeber 16 verbunden ist, der beim intermittierenden Filmtransport beispielsweise einen Impuls bei jedem Transport um ein Filmbild an einen Mikroprozessor 10 abgibt. Der Mikroprozessor 10 ist mit einer Speichereinrichtung 11, einer an der Laufbildkamera angeordneten Eingabetastatur 13 sowie einer Anzeigeeinrichtung 12 verbunden. Über einen Eingabe-/Ausgabe-Port ist der Mikroprozessor 10 mit einer Datenübertragungseinrichtung bzw. Kameraschnittstelle 15 verbunden, die vorzugsweise im Bereich der Anlenkung einer Filmkassette an dem Kamerakörper angeordnet ist.

Die Filmkassette 2 enthält eine Speichereinrichtung 21 in Form eines EEPROM, Flash-EEPROM, batteriegepufferten RAM oder dergleichen. Die Speichereinrichtung 21 ist mit einer Datenübertragungseinrichtung bzw. Kassettenschnittstelle 25 verbunden, die über eine Datenleitung 5 mit der Kameraschnittstelle 15 kommuniziert. Die Datenleitung 5 sowie die Datenübertragungseinrichtungen oder Schnittstellen 15, 25 der Laufbildkamera 1 bzw. der Filmkassette 2 können wahlweise für eine opto-elektronische oder magnetische Datenübertragung bzw. für eine Datenübertragung über eine Leitungsverbindung ausgelegt sein.

Die mit einer eigenen Eingabe- und Anzeigeeinheit 20 versehenen Filmkassetten 2 wie beispielsweise die Filmkassetten 201 und 202 gemäß Figur 1 weisen zusätzlich zu der Kassettenschnittstelle 25 und der Speichereinrichtung 21 ein Kassettendisplay 22 und eine Eingabetastatur 23 auf, die mit einem Mikroprozessor 24 verbunden sind, an den auch die Speichereinrichtung 21 angeschlossen ist. Über das Kassettendisplay 22 und die Eingabetastatur 23 können von einem Benutzer Daten in die Speichereinrichtung 21 der Filmkassette 2 eingegeben bzw. die darin gespeicherten Daten abgerufen und auf dem Kassettendisplay 22 zur Anzeige gebracht werden. Diese zusätzlichen Elemente 22, 23, 24 sind jedoch optional. Erfindungswesentlich ist lediglich die Anordnung einer Speichereinrichtung 21 in Verbindung mit einer Schnittstelle 25 zum Datenaustausch mit der Laufbildkamera 1 bzw. der elektronischen Datenverarbeitungseinheit 3.

Die elektronische Datenverarbeitungseinrichtung 3 enthält ein Speicher- und Rechenwerk 30 zur Speicherung und Verarbeitung von Daten, eine Eingabetastatur 33 sowie ein Display 32 zur Anzeige von Daten. Über eine Schnittstelle 35 kann die elektronische Datenverarbeitungseinrichtung 3 über Datenleitungen 41, 42 mit den Schnittstellen 15, 25 der Laufbildkamera 1 bzw. Filmkassette 2 verbunden werden. Über eine weitere Schnittstelle 34 kann ein bidirektionaler Datenverkehr mit weiteren elektronischen Datenverarbeitungseinrichtungen hergestellt werden.

Mit Bezug auf die Figuren 1 und 2 wird nachstehend die Betriebsweise des erfindungsgemäßen Kamera-Kassetten-Systems anhand eines Anwendungsbeispieles beschrieben.

Beim Einlegen eines unbelichteten Laufbildfilms beispielsweise in die Filmkassette 201 werden an der Eingabetastatur 23 die Länge des unbelichteten Films sowie gegebenenfalls die Filmtype, Filmart, der Filmhersteller und/oder die Produktionsnummer eingegeben. (Alternativ kann bei fehlender Eingabevorrichtung 20 an den Filmkassetten 203 und 204 die Eingabe der Länge des unbelichteten Laufbildfilms an der Eingabetastatur 13 der Laufbildkamera 101 oder 102 bzw. an der Eingabetastatur 33 der elektronischen Datenverarbeitungseinheit 3 eingegeben und in den Speicher 21 der Filmkassetten 203, 204 übertragen werden.)

Während der Filmaufnahme wird bei laufender Laufbildkamera 101 die Länge des unbelichteten, in der Filmkassette 201 verbleibenden Laufbildfilmes kontinuierlich in Meter oder Fuß auf der Anzeigeeinrichtung 12 der Laufbildkamera 101 angezeigt. Zusätzlich oder alternativ kann die Anzeige des in der Kassette vorhandenen unbelichteten Films auf der Anzeigeeinrichtung 22 der Filmkassette 201 angezeigt werden. Die Länge des belichteten Films wird mittels des Impulsgebers 16, der mit dem Filmschaltwerk (Filmzahnzahnrolle) 14 gekoppelt ist und bei jedem belichteten Filmbild einen Impuls an den Mikroprozessor 10 der Laufbildkamera 101 abgibt, erfaßt. Die Länge des belichteten Films wird von der ursprünglich eingegebenen Länge des unbelichteten Films abgezogen und die Differenz auf der Anzeigeeinrichtung 12 der Laufbildkamera 101 zur Anzeige gebracht.

Alternativ oder zusätzlich kann über die Kameraschnittstelle 15 und die Datenleitung 5 die Länge des unbelichteten Films über die Kassettenschnittstelle 25 kontinuierlich in die Speichereinrichtung 21 der Filmkassette 201 abgelegt und auf der Anzeigeeinrichtung 22 zur Anzeige gebracht werden.

Nach Beendigung der Filmaufnahme bzw. einem Kassettenwechsel besteht die weitere Möglichkeit, die Filmkassette 201 an einen entsprechenden Adapter der elektronischen Datenverarbeitungseinrichtung 3 anzuschließen und die aktuellen Daten aus der Speichereinrichtung 21 der Filmkassette 201 in die elektronische Datenverarbeitungseinheit 3 zu übertragen, wo sie für Dokumentationszwecke bzw. zur Überwachung der belichteten oder unbelichteten Filmlängen abgespeichert werden.

Im Falle eines Rückwärtslaufs der Laufbildkamera 101 wird die Länge des zurücktransportierten Laufbildfilmes erfaßt und ebenfalls in der Speichereinrichtung 21 der Filmkassette 201 abgelegt.

Nach Abnahme der Filmkassette 201 von der Laufbildkamera 101 kann eine Einraumkassette 203 an die Laufbildkamera 101 angelenkt werden, die über keine eigene Eingabe- und Anzeigevorrichtung wie die Filmkassette 201 verfügt. Durch Eingabe der in die Filmkassette 203 eingelegten unbelichteten Filmlänge an der Eingabetastatur 13 der Laufbildkamera 101 wird die Filmlänge an der Laufbildkamera 101 angezeigt und es können gegebenenfalls weitere film- und produktionsspezifische Daten eingegeben werden, die in der Speichereinrichtung 21 der Filmkassette 203 abgelegt werden. Auch hier erfolgt die Übertragung der Daten über den Kameraprozessor 10 und die Kameraschnittstelle 15 über die Datenleitung 5 zur Kassettenschnittstelle 25 in die Speichereinrichtung 21 der Filmkassette 203.

Während des Kameralaufs wird die Länge des belichteten Films in der vorbeschriebenen Weise über den mit dem Filmschaltwerk 14 gekoppelten Impulsgeber 16 und den Mikroprozessor 10 der Laufbildkamera 101 erfaßt und kontinuierlich oder beispielsweise nach Beendigung einer Aufnahmesequenz über die Übertragungseinrichtungen 15, 5, 25 in die Speichereinrichtung 21 der Filmkassette 203 übertragen.

In der gleichen, vorbeschriebenen Weise kann die weitere Koaxialkassette 202 sowie die Einraumkassette 204 mit der Laufbildkamera 101 verbunden und die Länge des eingegebenen, unbelichteten Films über die Kameratastatur 13 bzw. die Kassettentastatur 23 eingegeben werden. Alternativ kann vor einer Verbindung der Filmkassette 201 bis 204 mit der Laufbildkamera 101 die Länge des unbelichteten Films über die elektronische Datenverarbeitungseinheit 3 eingegeben und in der Speichereinrichtung 21 der Filmkassetten 201-204 gegebenenfalls mit zusätzlichen film- und produktionsspezifischen Daten abgelegt werden.

Da jede Filmkassette 201-204 über eine eigene Speichereinrichtung 21 verfügt, kann jede der Filmkassetten 201-204 auch mit der anderen Laufbildkamera 102 verbunden werden, ohne daß kassetten-, film- und produktionsspezifische Daten verlorengehen. Bei jedem Neubeladen einer Filmkassette 201-204 mit unbelichtetem oder teilweise belichtetem Laufbildfilm können die Daten je nach Ausrüstung der Filmkassette unmittelbar über eine Eingabetastatur 23 der Filmkassette 201, 202 bzw. an der Eingabetastatur 13 der Laufbildkamera 101, 102 bzw. an der Eingabetastatur 33 der elektronischen Datenverarbeitungseinheit 3 eingegeben werden.

Eine belichteten und/oder unbelichteten Laufbildfilm aufweisende Filmkassette 201 bis 204 kann unter Beibehalten der dem betreffenden Laufbildfilm zugeordneten Daten somit wahlweise in Verbindung mit der einen oder anderen Laufbildkamera 101 bzw. 102 oder weiteren Laufbildkameras betrieben werden, die dieselbe Filmbreite verarbeiten. Im Falle einer Kamerastörung tritt daher kein Datenverlust auf, wenn die betreffenden Filmkassetten 201 bis 204 mit anderen Laufbildkameras verbunden werden.

## Patentansprüche

1. Laufbildkamera-Kassetten-System zum Erfassen, Austauschen und Speichern von Daten mit
- mindestens einer Filmkassette (2; 201-204), die einen belichteten und/oder unbelichteten Laufbildfilm und eine Speichereinrichtung (21) enthält, die die Länge des belichteten und/oder unbelichteten Laufbildfilms sowie zusätzliche film-, kassettenund produktionsspezifische Daten speichert,
- mindestens einer Laufbildkamera (1; 101, 102), die eine Einrichtung (16) zur Erfassung der belichteten Länge des Laufbildfilmes, eine Eingabetastatur (13), eine Anzeigeeinrichtung (12), eine Speichereinrichtung (11) und eine Datenaustauscheinrichtung (10, 15) zum Austausch von Daten mit der Speichereinrichtung (21) der Filmkassette (2; 201-204) aufweist, die die Änderung der belichteten Filmlänge in die Speichereinrichtung (21) der Filmkassette (2; 201-204) überträgt,
- einer mit der Laufbildkamera (1; 101, 102) und der Filmkassette (2; 201-204) verbindbaren elektronischen Datenverarbeitungseinrichtung (3), die, unabhängig von dem Datenaustausch durch die Datenaustauscheinrichtung (10, 15), die von der Laufbildkamera (1; 101, 102) oder der Filmkassette (2; 201-204) abgegebenen Daten verarbeitet, dokumentiert und/oder anzeigt und Daten an die Laufbildkamera (1; 101, 102) oder die Filmkassette (2; 201-204) abgibt.

2. Laufbildkamera-Kassetten-System nach Anspruch 1 wobei die Länge des belichteten und/oder unbelichteten Laufbildfilms einer Filmkassette (2; 201-204) auf der Anzeigeeinrichtung (12) der Laufbildkamera (1; 101, 102) oder einer Anzeigeeinrichtung (22) der Filmkassette (2; 201-204) anzeigbar ist.

3. Laufbildkamera-Kassetten-System nach Anspruch 1 oder 2, wobei die Speichereinrichtung (21) der Filmkassette (2; 201-204) mit einem der eingelegten Filmlänge entsprechenden Wert ladbar ist.

4. Laufbildkamera-Kassetten-System nach mindestens einem der vorangehenden Ansprüche, wobei die elektronische Datenverarbeitungseinrichtung (3) Daten über eine serielle Schnittstelle (41, 42) an die Laufbildkamera (1; 101, 102) und/oder die Filmkassette (2; 201-204) abgibt.

5. Laufbildkamera-Kassetten-System nach mindestens einem der vorangehenden Ansprüche, wobei der Datenaustausch zwischen der Laufbildkamera (1; 101, 102) und der Filmkassette (2; 201-204) über eine elektro-optische oder magnetische Übertragungseinrichtung oder eine elektrische Leitungsverbindung erfolgt.

6. Laufbildkamera-Kassetten-System nach mindestens einem der vorangehenden Ansprüche, wobei die Eingabe der Filmlänge an der Eingabeeinrichtung (13) der Laufbildkamera (1; 101, 102), der Eingabeeinrichtung (23) der Filmkassette (2; 201-204) und/oder einer Eingabeeinrichtung (33) der elektronischen Datenverarbeitungseinrichtung (3) erfolgt.

7. Laufbildkamera-Kassetten-System nach Anspruch 6, wobei der Datenaustausch zwischen der Laufbildkamera (1; 101, 102) und der Filmkassette (2; 201-204) bzw. der Laufbildkamera (1; 101, 102) und der elektronischen Datenverarbeitungseinrichtung (3) über eine an der Laufbildkamera (1; 101, 102) vorhandene Schnittstelle, beispielsweise eine Timecode-Schnittstelle, eine Video-Schnittstelle oder dergleichen erfolgt.

## Claims

1. Motion picture camera cassette system for detecting, exchanging and storing data, having
- at least one film cassette (2; 201-204), which contains an exposed and/or unexposed motion picture film and a storage device (21) which stores the length of the exposed and/or unexposed motion picture film as well as, in addition, film-, cassette- and production-specific data
- at least one motion picture camera (1; 101, 102), which has a device (16) for detecting the expose length of the motion picture film, an input keypad (13), a display device (12), a storage device (11) and a data exchange device (10, 15) for exchanging data with the storage device (21) of the film cassette (2; 201-204), which transmits the change in the exposed film length into the storage device (21) of the film cassette (2; 201-204), and
- an electronic data-processing device (3), which can be connected to the motion picture camera (1; 101, 102) and the film cassette (2; 201-204), processes documents and/or displays, in a fashion independent of the data exchange via the data exchange device (10, 15), the data output from the motion picture camera (1; 101, 102) or the film cassette (2; 201-204), and outputs data to the motion picture camera (1; 101, 102) or the film cassette (2; 201-204).

2. Motion picture camera cassette system according to Claim 1, in which the length of the exposed and/or unexposed motion picture film of a film cassette (2; 201-204) can be displayed on the display device (12) of the motion picture camera (1; 101, 102) or a display device (22) of the film cassette (2; 201-204).

3. Motion picture camera cassette system according to Claim 1 or 2, in which the storage device (21) of the film cassette (2; 201-204) can be loaded with a value corresponding to the inserted film length.

4. Motion picture camera cassette system according to at least one of the preceding claims, in which the electronic data-processing device (3) outputs data to the motion picture camera (1; 101, 102) and/or the film cassette (2; 201-204), via a serial interface (41, 42).

5. Motion picture camera cassette system according to at least one of the preceding claims, in which the data is exchanged between the motion picture camera (1; 101, 102) and the film cassette (2; 201-204) via an electrooptical or magnetic transmitting device or an electric line connection.

6. Motion picture camera cassette system according to at least one of the preceding claims, in which the film length is input at the input device (13) of the motion picture camera (1; 101, 102), the input device (23) of the film cassette (2; 201-204) and/or an input device (33) of the electronic data-processing device (3).

7. Motion picture camera cassette system according to Claim 6, in which the data is exchanged between the motion picture camera (1; 101, 102) and the film cassette (2; 201-204) and/or between the motion picture camera (1; 101, 102) and the electronic data-processing device (3) via an interface present at the motion picture camera (1; 101, 102), for example a time code interface, a video interface or the like.

## Revendications

1. Système de caméra et cassettes pour la saisie, l'échange et la mémorisation de données avec
- au moins une cassette de film (2 ; 201-204) qui contient un film exposé et/ou non exposé et un dispositif de mémorisation (21) qui mémorise la longueur du film exposé et/ou non exposé, ainsi que des données supplémentaires spécifiques au film, à la cassette et à la production,
- au moins une caméra (1 ; 101, 102) qui présente un dispositif (16) pour la saisie de la longueur exposée du film, un clavier d'entrée (13), un dispositif d'affichage (12), un dispositif de mémoire (11) et un dispositif d'échange de données (10, 15) pour l'échange de données avec le dispositif de mémoire (21) de la cassette de film (2 ; 201-204) qui transmet la modification de la longueur de film exposé dans le dispositif de mémoire (21) de la cassette de film (2 ; 201-204),
- un dispositif de traitement électronique des données (3) pouvant être connecté à la caméra (1 ; 101, 102) et à la cassette de film (2 ; 201-204) qui, indépendamment de l'échange de données par le biais du dispositif d'échange de données (10, 15), traite, documente et/ou affiche les données émises par la caméra (1 ; 101, 102) ou par la cassette de film (2 ; 201-204) et émet les données à la caméra (1 ; 101, 102) ou à la cassette de film (2 ; 201-204).

2. Système de caméra et cassettes selon la revendication 1, dans lequel la longueur de film exposé et/ou non exposé d'une cassette de film (2 ; 201-204) peut être affichée sur le dispositif d'affichage (12) de la caméra (1 ; 101, 102) ou sur un dispositif d'affichage (22) de la cassette de film (2 ; 201-204).

3. Système de caméra et cassettes selon la revendication 1 ou 2, dans lequel le dispositif de mémoire (21) de la cassette de film (2 ; 201-204) peut être chargé avec une valeur correspondant à la longueur de film introduite.

4. Système de caméra et cassettes selon au moins l'une des revendications précédentes, dans lequel le dispositif de traitement électronique des données (3) émet des données par l'intermédiaire d'une interface en série (41, 42) à la caméra (1 ; 101, 102) et/ou à la cassette de film (2 ; 201-204).

5. Système de caméra et cassettes selon au moins l'une des revendications précédentes, dans lequel l'échange de données entre la caméra (1 ; 101, 102) et la cassette de film (2 ; 201-204) s'effectue par l'intermédiaire d'un dispositif de transfert électro-optique ou magnétique ou par une connexion de conduite électrique.

6. Système de caméra et cassettes selon au moins l'une des revendications précédentes, dans lequel l'entrée de la longueur de film s'effectue sur le dispositif d'entrée (13) de la caméra (1 ; 101, 102), du dispositif d'entrée (23) de la cassette de film (2 ; 201-204) et/ou d'un dispositif d'entrée (33) du dispositif de traitement électronique des données (3).

7. Système de caméra et cassettes selon la revendication 6, dans lequel l'échange de données entre la caméra (1 ; 101, 102) et la cassette de film (2 ; 201-204) ou la caméra (1 ; 101, 102) et le dispositif de traitement électronique des données (3) s'effectue par une interface présente sur la caméra (1 ; 101, 102), par exemple une interface "time code" ou de code relatif au temps, une interface vidéo ou analogue.
